# EUROPEAN PATENT APPLICATION

(11) **EP 3 737 164 A1**
(43) Date of publication of application: **11.11.2020**
(21) Application number: 19754478.6
(22) Date of filing: 13.02.2019
(51) Int. Cl.: H04W 52/02, H04W 72/12, H04L 5/00

(54) **METHOD AND DEVICE FOR DETERMINING SCHEDULING DELAY**

(30) Priority: 13.02.2018 CN 201810150929
(71) Applicant: Huawei Technologies Co. Ltd., Shenzhen, Guangdong 518129 (CN)
(72) Inventor: TIE, Xiaolei, Shenzhen, Guangdong 518129 (CN); TANG, Hao, Shenzhen, Guangdong 518129 (CN); ZHANG, Zhang, Shenzhen, Guangdong 518129 (CN)
(74) Representative: Epping - Hermann - Fischer
(86) International application number: PCT/CN2019/074952
(87) International publication number: WO 2019/158082

(57) **Abstract**

This application provides a scheduling latency determining method, and relates to the field of communications technologies, to reduce power consumption of UE. The solution includes: sending, by a terminal apparatus, information about one or more component carrier CC groups to a communications apparatus, where the information about the one or more CC groups is used by the communications apparatus to determine N CC groups, each of the N CC groups includes one or more CCs, and N is a positive integer; receiving, by the terminal apparatus, a scheduling latency set sent by the communications apparatus; and determining, by the terminal apparatus based on the scheduling latency set, a scheduling latency of scheduling a data channel corresponding to a control channel by using the control channel. This solution may be used to reduce power consumption of the terminal apparatus.

## Description

This application claims priority to Chinese Patent Application No. 201810150929.0, filed with the Chinese Patent Office on February 13, 2018 and entitled "SCHEDULING LATENCY DETERMINING METHOD AND APPARATUS", which is incorporated in the embodiments of this application by reference in its entirety.

### TECHNICAL FIELD

This application relates to the field of communications technologies, and in particular, to a scheduling latency determining method and apparatus.

### BACKGROUND

The 3rd generation partnership project (3rd generation partnership project, 3GPP) release 10 (Release 10, R10) proposes a carrier aggregation (carrier aggregation, CA) technology, and introduces the CA technology into a long term evolution advanced (long term evolution-advanced, LTE-A) cellular communications system. Carrier aggregation means that a network simultaneously schedules (scheduling) and sends downlink data to a single user equipment (user equipment, UE) by using a plurality of component carriers (component carrier, CC), or grant (grant) the UE to simultaneously send uplink data to the network on a plurality of CCs. In contrast, in a conventional LTE system, a network can schedule, by using only one CC, UE to receive downlink data or grant the UE to send uplink data on one CC. Therefore, due to the introduction of CA, an uplink throughput and a downlink throughput of the UE increase exponentially with an increase of a quantity of CCs.

Currently, 3GPP is working on standardization of 5th generation (the 5th generation, 5G) new radio (new radio, NR), and CA is further enhanced in NR as an important technical point. In LTE-Advanced, a maximum bandwidth of a CC is 20 MHz. In NR, a maximum bandwidth of a CC may be up to 100 MHz.

However, when a plurality of CCs are simultaneously activated, power consumption of UE greatly increases. Therefore, when the plurality of CCs are activated, how to reduce the power consumption of the UE is a technical problem that needs to be urgently resolved in a future communications system.

### SUMMARY

This application provides a scheduling latency determining method and apparatus, to reduce power consumption of UE.

To achieve the foregoing objective, the following technical solutions are used in embodiments of this application.

According to a first aspect, this application provides a scheduling latency determining method, including: sending, by a terminal apparatus, information about one or more component carrier CC groups to a communications apparatus, where the information about the one or more CC groups is used by the communications apparatus to determine N CC groups, each of the N CC groups includes one or more CCs, and N is a positive integer; receiving, by the terminal apparatus, a scheduling latency set sent by the communications apparatus; and determining, by the terminal apparatus based on the scheduling latency set, a scheduling latency of scheduling a data channel corresponding to a control channel by using the control channel.

This application provides a scheduling latency determining method. A terminal apparatus sends information about one or more CC groups to a communications apparatus, so that the communications apparatus configures a scheduling latency set for the terminal apparatus based on the CC group. Therefore, the terminal apparatus may determine, based on the scheduling latency set, a scheduling latency of scheduling a data channel corresponding to a control channel by using the control channel. In this way, when a CC is not scheduled, the terminal apparatus may disable a module required for processing the CC, for example, disable a radio frequency (radio frequency, RF) module and a baseband module, or the terminal apparatus may indicate the module required for processing the CC to be in a low power mode. In other words, when the terminal apparatus schedules data on one or more CCs, the terminal apparatus may disable a processing module corresponding to a CC group other than CC groups in which the one or more CCs are located in N CC groups, thereby reducing power consumption of the terminal apparatus.

In a possible design, the method provided in this application further includes: receiving, by the terminal apparatus, one or more CCs configured by the communications apparatus; and classifying, by the terminal apparatus, the one or more CCs into one or more CC groups based on power consumption of the one or more CCs, where power consumption corresponding to one or more CCs included in any one of the one or more CC groups is less than power consumption corresponding to a plurality of CCs included in any two or more of the one or more CC groups. The terminal apparatus classifies one or more CCs into one or more CC groups based on power consumption corresponding to each CC. Because power consumption corresponding to one or more CCs included in any one of the one or more CC groups is less than power consumption corresponding to a plurality of CCs included in any two or more of the one or more CC groups, when scheduling a CC in any CC group, the communications apparatus may disable a module for processing a CC included in a remaining CC group, thereby reducing power consumption of the terminal apparatus.

In a possible design, the scheduling latency set includes a first scheduling latency, and the determining, by the terminal apparatus based on the scheduling latency set, a scheduling latency of scheduling a data channel corresponding to a control channel by using the control channel includes: if the terminal apparatus determines that the control channel is sent on a first CC and the scheduled data channel corresponding to the control channel is sent on the first CC, determining, by the terminal apparatus, that a scheduling latency of scheduling, by using the control channel sent on the first CC, the data channel that is corresponding to the control channel and that is sent on the first CC is the first scheduling latency, where the first CC is a CC included in any one of the N CC groups.

In a possible design, the scheduling latency set includes a second scheduling latency, and the determining, by the terminal apparatus based on the scheduling latency set, a scheduling latency of scheduling a data channel corresponding to a control channel by using the control channel includes: if the terminal apparatus determines that the control channel is sent on a first CC and the scheduled data channel corresponding to the control channel is sent on a second CC, and that the first CC and the second CC belong to a same CC group, determining, by the terminal apparatus, that a scheduling latency of scheduling, by using the control channel sent on the first CC, the data channel that is corresponding to the control channel and that is sent on the second CC is the second scheduling latency, where the second scheduling latency is greater than a first scheduling latency.

In a possible design, the scheduling latency set includes a third scheduling latency, and the determining, by the terminal apparatus based on the scheduling latency set, a scheduling latency of scheduling a data channel corresponding to a control channel by using the control channel includes: if the terminal apparatus determines that the control channel is sent on a first CC and the scheduled data channel corresponding to the control channel is sent on a third CC, and that the first CC and the third CC belong to different CC groups, determining, by the terminal apparatus, that a scheduling latency of scheduling, by using the control channel sent on the first CC, the data channel that is corresponding to the control channel and that is sent on the third CC is the third scheduling latency, where the third scheduling latency is greater than a first scheduling latency.

In a possible design, the third scheduling latency is obtained by using the first scheduling latency and a preset latency, or the third scheduling latency is obtained through configuration by using higher layer signaling.

In a possible design, the method provided in this application further includes: receiving, by the terminal apparatus, first signaling sent by the communications apparatus on the first CC, where the first signaling is used to indicate the terminal apparatus to dynamically activate or dynamically deactivate the second CC, and the first CC and the second CC belong to a same CC group.

In a possible design, the method provided in this application further includes: receiving, by the terminal apparatus, second signaling sent by the communications apparatus, where the second signaling includes a media access control control element MAC CE, and the second signaling is used to indicate the terminal apparatus to activate or deactivate all CCs in any one of the N CC groups.

According to a second aspect, this application provides a scheduling latency determining method, including: receiving, by a communications apparatus, information that is about one or more component carrier CC groups and that is sent by a terminal apparatus; determining, by the communications apparatus, N component carrier CC groups based on the information about the one or more component carrier CC groups, where each of the N CC groups includes one or more CCs, and N is a positive integer; and sending, by the communications apparatus, a scheduling latency set to the terminal apparatus, where the scheduling latency set is used to determine a scheduling latency of scheduling a data channel corresponding to a control channel by using the control channel.

In a possible design, the scheduling latency set includes a first scheduling latency, the scheduling latency set is used by the terminal apparatus to determine that a scheduling latency of scheduling, by using the control channel sent on a first CC, the data channel that is corresponding to the control channel and that is sent on the first CC is the first scheduling latency, the first CC is a CC included in any one of the N CC groups, and the first scheduling latency is greater than or equal to 0.

In a possible design, the scheduling latency set includes a second scheduling latency, the second scheduling latency is greater than the first scheduling latency, the scheduling latency set is used to indicate the terminal apparatus to determine that a scheduling latency of scheduling, by using the control channel sent on a first CC, the data channel that is corresponding to the control channel and that is sent on a second CC is the second scheduling latency, and the first CC and the second CC belong to a same CC group.

In a possible design, the scheduling latency set includes a third scheduling latency, the third scheduling latency is greater than the first scheduling latency, the scheduling latency set is used to indicate the terminal apparatus to determine that a scheduling latency of scheduling, by using the control channel sent on a first CC, the data channel that is corresponding to the control channel and that is sent on a third CC is the third scheduling latency, and the first CC and the third CC belong to different CC groups.

In a possible design, the method provided in this application further includes: sending, by the communications apparatus, first signaling to the terminal apparatus on the first CC, where the first signaling is used to indicate the terminal apparatus to dynamically activate or dynamically deactivate the second CC, and the first CC and the second CC belong to a same CC group.

In a possible design, the method provided in this application further includes: sending, by the communications apparatus, second signaling to the terminal apparatus, where the second signaling includes a media access control control element MAC CE, and the second signaling is used to indicate the terminal apparatus to activate or deactivate all CCs in any one of the N CC groups.

In a possible design, power consumption corresponding to one or more CCs included in any one of the N CC groups is less than power consumption corresponding to a plurality of CCs included in any two or more of the N CC groups.

According to a third aspect, this application provides a scheduling latency determining apparatus. The scheduling latency determining apparatus may be a terminal device, and the scheduling latency determining apparatus may implement the scheduling latency determining method described in any one of the first aspect to the possible designs of the first aspect. For example, the scheduling latency determining apparatus may be a terminal device or a chip applied to the terminal device. The scheduling latency determining apparatus may implement the foregoing method by using software or hardware, or by executing corresponding software by hardware.

In the third aspect, the scheduling latency determining apparatus includes: a sending unit, configured to send information about one or more component carrier CC groups to a communications apparatus, where the information about the one or more CC groups is used by the communications apparatus to determine N CC groups, each of the N CC groups includes one or more CCs, and N is a positive integer; a receiving unit, configured to receive a scheduling latency set sent by the communications apparatus; and a determining unit, configured to determine, based on the scheduling latency set, a scheduling latency of scheduling a data channel corresponding to a control channel by using the control channel.

In a possible design, the receiving unit is further configured to receive one or more CCs configured by the communications apparatus; and the determining unit is further configured to classify the one or more CCs into one or more CC groups based on power consumption corresponding to the one or more CCs, where power consumption corresponding to one or more CCs included in any one of the one or more CC groups is less than power consumption corresponding to a plurality of CCs included in any two or more of the one or more CC groups.

In a possible design, the scheduling latency set includes a first scheduling latency, and the determining unit is specifically configured to: if determining that the control channel is sent on a first CC and the scheduled data channel corresponding to the control channel is sent on the first CC, determine that a scheduling latency of scheduling, by using the control channel sent on the first CC, the data channel that is corresponding to the control channel and that is sent on the first CC is the first scheduling latency, where the first CC is a CC included in any one of the N CC groups.

In a possible design, the scheduling latency set includes a second scheduling latency, and the determining unit is specifically configured to: if determining that the control channel is sent on a first CC and the scheduled data channel corresponding to the control channel is sent on a second CC, and that the first CC and the second CC belong to a same CC group, determine that a scheduling latency of scheduling, by using the control channel sent on the first CC, the data channel that is corresponding to the control channel and that is sent on the second CC is the second scheduling latency, where the second scheduling latency is greater than a first scheduling latency.

In a possible design, the scheduling latency set includes a third scheduling latency, and the determining unit is specifically configured to: if determining that the control channel is sent on a first CC and the scheduled data channel corresponding to the control channel is sent on a third CC, and that the first CC and the third CC belong to different CC groups, determine that a scheduling latency of scheduling, by using the control channel sent on the first CC, the data channel that is corresponding to the control channel and that is sent on the third CC is the third scheduling latency, where the third scheduling latency is greater than a first scheduling latency.

In a possible design, the third scheduling latency is obtained by using the first scheduling latency and a preset latency, or the third scheduling latency is obtained through configuration by using higher layer signaling.

In a possible design, the receiving unit is further configured to receive first signaling sent by the communications apparatus on the first CC, where the first signaling is used to indicate to dynamically activate or dynamically deactivate the second CC, and the first CC and the second CC belong to a same CC group.

In a possible design, the receiving unit is further configured to receive second signaling sent by the communications apparatus, where the second signaling includes a media access control control element MAC CE, and the second signaling is used to indicate to activate or deactivate all CCs in any one of the N CC groups.

According to a fourth aspect, this application provides a scheduling latency determining apparatus. The scheduling latency determining apparatus may be a network device, and the scheduling latency determining apparatus may implement the scheduling latency determining method described in any one of the second aspect to the possible designs of the second aspect. For example, the scheduling latency determining apparatus may be a network device or a chip applied to the network device. The scheduling latency determining apparatus may implement the foregoing method by using software or hardware, or by executing corresponding software by hardware.

In the fourth aspect, the scheduling latency determining apparatus includes: a receiving unit, configured to receive information that is about one or more component carrier CC groups and that is sent by a terminal apparatus; a determining unit, configured to determine N component carrier CC groups based on the information about the one or more component carrier CC groups, where each of the N CC groups includes one or more CCs, and N is a positive integer; and a sending unit, configured to send a scheduling latency set to the terminal apparatus, where the scheduling latency set is used to determine a scheduling latency of scheduling a data channel corresponding to a control channel by using the control channel.

In a possible design, the scheduling latency set includes a first scheduling latency, the scheduling latency set is used by the terminal apparatus to determine that a scheduling latency of scheduling, by using the control channel sent on a first CC, the data channel that is corresponding to the control channel and that is sent on the first CC is the first scheduling latency, the first CC is a CC included in any one of the N CC groups, and the first scheduling latency is greater than or equal to 0.

In a possible design, the scheduling latency set includes a second scheduling latency, the second scheduling latency is greater than the first scheduling latency, the scheduling latency set is used to indicate the terminal apparatus to determine that a scheduling latency of scheduling, by using the control channel sent on a first CC, the data channel that is corresponding to the control channel and that is sent on a second CC is the second scheduling latency, and the first CC and the second CC belong to a same CC group.

In a possible design, the scheduling latency set includes a third scheduling latency, the third scheduling latency is greater than the first scheduling latency, the scheduling latency set is used to indicate the terminal apparatus to determine that a scheduling latency of scheduling, by using the control channel sent on a first CC, the data channel that is corresponding to the control channel and that is sent on a third CC is the third scheduling latency, and the first CC and the third CC belong to different CC groups.

In a possible design, the sending unit is further configured to send first signaling to the terminal apparatus on the first CC, where the first signaling is used to indicate the terminal apparatus to dynamically activate or dynamically deactivate the second CC, and the first CC and the second CC belong to a same CC group.

In a possible design, the sending unit is further configured to send second signaling to the terminal apparatus, where the second signaling includes a media access control control element MAC CE, and the second signaling is used to indicate the terminal apparatus to activate or deactivate all CCs in any one of the N CC groups.

In a possible design, power consumption corresponding to one or more CCs included in any one of the N CC groups is less than power consumption corresponding to a plurality of CCs included in any two or more of the N CC groups.

According to a fifth aspect, this application provides a chip, and the chip includes a processor and an interface circuit. The interface circuit is coupled to the processor, the processor is configured to run a computer program or an instruction, to implement the method described in any one of the first aspect and the possible designs of the first aspect, and the interface circuit is configured to communicate with a module other than the chip.

According to a sixth aspect, this application provides a chip, and the chip includes a processor and an interface circuit. The interface circuit is coupled to the processor, the processor is configured to run a computer program or an instruction, to implement the method described in any one of the second aspect and the possible designs of the second aspect, and the interface circuit is configured to communicate with a module other than the chip.

According to a seventh aspect, this application provides a computer readable storage medium. The computer readable storage medium stores a computer program or an instruction, and when the computer program or the instruction is run, the method described in any one of the first aspect and the possible designs of the first aspect is implemented.

According to an eighth aspect, this application provides a computer readable storage medium. The computer readable storage medium stores a computer program or an instruction, and when the computer program or the instruction is run, the method described in any one of the second aspect and the possible designs of the second aspect is implemented.

According to a ninth aspect, this application provides a computer program product including an instruction. The computer program product stores an instruction, and when the instruction is run, a terminal device is enabled to perform the method described in any one of the first aspect and the possible designs of the first aspect.

According to a tenth aspect, this application provides a computer program product including an instruction. The computer program product stores an instruction, and when the instruction is run, a network device is enabled to perform the method described in any one of the second aspect and the possible designs of the second aspect.

According to an eleventh aspect, this application provides a communications system. The communications system includes the terminal device described in any one of the third aspect and the possible designs of the third aspect and the network device described in any one of the fourth aspect and the possible designs of the fourth aspect.

### BRIEF DESCRIPTION OF DRAWINGS

FIG. 1 is a schematic diagram of an architecture of a communications system according to this application;
FIG. 2 is a schematic structural diagram of a base station according to this application;
FIG. 3 is a schematic structural diagram of another base station according to this application;
FIG. 4 is a schematic flowchart 1 of a scheduling latency determining method according to this application;
FIG. 5 is a schematic diagram of scheduling according to this application;
FIG. 6 is a schematic flowchart 2 of a scheduling latency determining method according to this application;
FIG. 7 is still another schematic diagram of scheduling according to this application;
FIG. 8 is a schematic flowchart 3 of a scheduling latency determining method according to this application;
FIG. 9 is a schematic flowchart 4 of a scheduling latency determining method according to this application;
FIG. 10 is a schematic flowchart 5 of a scheduling latency determining method according to this application;
FIG. 11 is a schematic flowchart 6 of a scheduling latency determining method according to this application;
FIG. 12 is another schematic diagram of scheduling according to this application;
FIG. 13 is a schematic structural diagram 1 of a terminal apparatus according to this application;
FIG. 14 is a schematic structural diagram 2 of a terminal apparatus according to this application;
FIG. 15 is a schematic structural diagram 3 of a terminal apparatus according to this application;
FIG. 16 is a schematic structural diagram 1 of a communications apparatus according to this application;
FIG. 17 is a schematic structural diagram 2 of a communications apparatus according to this application;
FIG. 18 is a schematic structural diagram 3 of a communications apparatus according to this application; and
FIG. 19 is a schematic structural diagram of a chip according to this application.

### DESCRIPTION OF EMBODIMENTS

The terms "first", "second", and the like in the embodiments of this application are merely intended to distinguish between different objects, and are not intended to limit a sequence thereof. For example, a first component carrier and a second component carrier are intended to distinguish between different component carriers, and are not intended to limit a sequence thereof.

The term "and/or" in the embodiments of this application describes only an association relationship for describing associated objects and indicates that three relationships may exist. For example, A and/or B may represent the following three cases: Only A exists, both A and B exist, and only B exists. In addition, the character "/" in the embodiments of this application generally indicates an "or" relationship between the associated objects.

It should be noted that the word "example" or "for example" in the embodiments of this application is used to represent giving an example, an illustration, or a description. Any embodiment or design scheme described as an "example" or "for example" in the embodiments of this application should not be explained as being more preferred or having more advantages than another embodiment or design scheme. Exactly, use of the word "example" or "for example" or the like is intended to present a relative concept in a specific manner.

A network architecture and a service scenario described in the embodiments of this application are intended to describe the technical solutions in the embodiments of this application more clearly, and do not constitute a limitation on the technical solutions provided in the embodiments of this application. A person of ordinary skill in the art may learn that with evolution of the network architecture and emergence of a new service scenario, the technical solutions provided in the embodiments of this application are also applicable to similar technical problems.

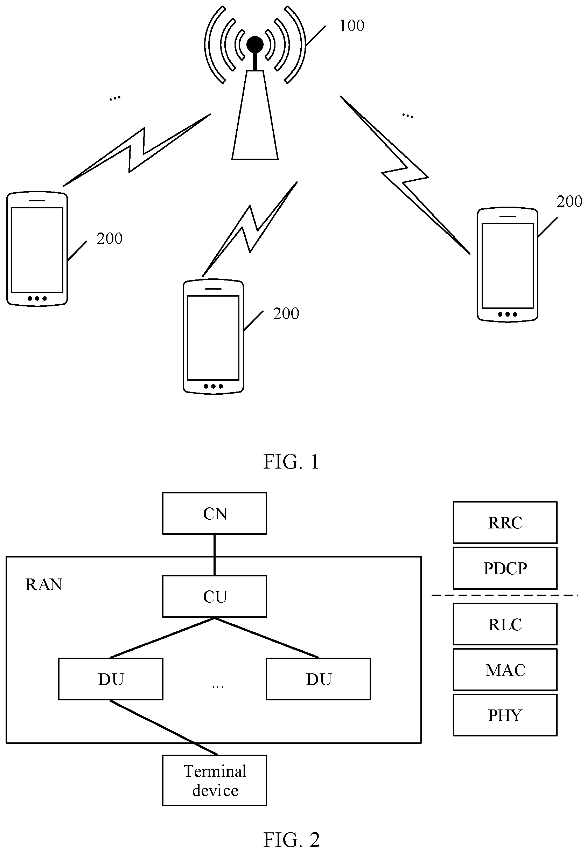

FIG. 1 is a schematic diagram of an architecture of a communications system according to this application. The communications system 100 includes one or more network devices 100 and one or more terminal devices 200 (FIG. 1 shows only three terminal devices, and more than three or less than three terminal devices may be included in an actual scenario).

The terminal device may alternatively be referred to as user equipment (user equipment, UE), an access terminal, a subscriber unit, a subscriber station, a mobile station, a mobile console, a remote station, a remote terminal, a mobile device, a user terminal, a terminal, a wireless communication device, a user agent, or a user apparatus. The terminal device may be a station (station, STA) in a wireless local area network (wireless local area networks, WLAN), and may be a cellular phone, a cordless phone, a session initiation protocol (session initiation protocol, SIP) phone, a wireless local loop (wireless local loop, WLL) station, a personal digital assistant (personal digital assistant, PDA) device, a handheld device having a wireless communication function, a computing device, another processing device connected to a wireless modem, a vehicle-mounted device, a wearable device, and a next-generation communications system, for example, a terminal device in a fifth-generation (fifth-generation, 5G) communications network, or a terminal device in a future evolved public land mobile network (public land mobile network, PLMN).

In an example, in the embodiments of this application, the terminal device may be alternatively a wearable device. The wearable device may alternatively be referred to as a wearable intelligent device, and is a collective name of wearable devices, such as glasses, gloves, a watch, clothes, and shoes, obtained after a wearable technology is used for intelligent design and development of daily wear. The wearable device is a portable device that is directly worn or integrated into clothes or an accessory of a user. The wearable device not only is a hardware device, but also implements a strong function through software support, data exchange, and cloud exchange. Generic wearable intelligent devices include a large full-featured wearable device, such as a smartwatch or smart glasses, capable of implementing all or some functions without relying on a smartphone; and a wearable device, such as various smart bands performing vital sign monitoring and smart jewelry, that concentrates only on a particular type of application function and needs to be used together with another device such as a smartphone.

The network device may be a device configured to communicate with a terminal device. The network device may be an access point (access point, AP) in a WLAN or a base transceiver station (base transceiver station, BTS) in global system for mobile communication (global system for mobile communication, GSM) or code division multiple access (code division multiple access, CDMA), or may be a NodeB (NodeB, NB) in wideband code division multiple access (wideband code division multiple access, WCDMA), or may be an evolved NodeB (evolved NodeB, eNB or eNodeB) in long term evolution (long term evolution, LTE), or a regeneration station or an access point, or a vehicle-mounted device, a wearable device, a network device in a future 5G network, a network device in a future evolved PLMN network, or the like.

In addition, in the embodiments of this application, the network device serves a cell, and the terminal device communicates with the network device by using a transmission resource (for example, a frequency domain resource or a time-frequency resource) used in the cell. The cell may be a cell corresponding to the network device (for example, a base station). The cell may belong to a macro base station, or may belong to a base station corresponding to a small cell (small cell). The small cell herein may include a metro cell (metro cell), a micro cell (micro cell), a pico cell (Pico cell), a femto cell (femto cell), and the like. These small cells are characterized by a small coverage area and low transmit power, and are suitable to provide a high-rate data transmission service.

A method and an apparatus provided in the embodiments of this application may be applied to a terminal device, and the terminal device includes a hardware layer, an operating system layer running above the hardware layer, and an application layer running above the operating system layer. The hardware layer includes hardware such as a central processing unit (central processing unit, CPU), a memory management unit (memory management unit, MMU), and a memory (also referred to as a main memory). The operating system may be any one or more computer operating systems, for example, a Linux operating system, a Unix operating system, an Android operating system, an iOS operating system, or a Windows operating system, implementing service processing by using a process (process). The application layer includes applications such as a browser, an address book, word processing software, and instant messaging software. In addition, in the embodiments of this application, a specific structure of a body for performing a scheduling latency determining method is not particularly limited in the embodiments of this application, provided that communication can be performed according to the scheduling latency determining method in the embodiments of this application by running a program of code that records the scheduling latency determining method in the embodiments of this application. For example, the scheduling latency determining method in the embodiments of this application may be performed by a terminal device, or a function module that is in the terminal device and that can invoke a program and execute the program.

In addition, aspects or features in the embodiments of this application may be implemented as a method, an apparatus, or a product that uses standard programming and/or engineering technologies. The term "product" used in the embodiments of this application covers a computer program that can be accessed from any computer readable component, carrier or medium. For example, the computer readable medium may include but is not limited to: a magnetic storage component (for example, a hard disk, a floppy disk or a magnetic tape), an optical disc (for example, a compact disc (compact disc, CD), a digital versatile disc (digital versatile disc, DVD), a smart card and a flash memory component (for example, an erasable programmable read-only memory (erasable programmable read-only memory, EPROM), a card, a stick, or a key drive). In addition, various storage media described in this specification may indicate one or more devices and/or other machine readable media that are configured to store information. The term "machine readable media" may include but is not limited to a radio channel, and various other media that can store, contain, and/or carry an instruction and/or data.

A future access network may be implemented by using a cloud radio access network (cloud radio access network, C-RAN) architecture. Therefore, in a possible manner, a protocol stack architecture and function of a conventional base station is divided into two parts: a centralized unit (centralized unit, CU) and a distributed unit (distributed unit, DU). The CU and the DU are actually deployed in a relatively flexible manner. For example, some of CUs of a plurality of base stations are integrated together to constitute a relatively large function entity. FIG. 2 is a schematic diagram of a network architecture according to an embodiment of this application. As shown in FIG. 2, the network architecture includes a core network (core network, CN) device and an access network (taking a radio access network (radio access network, RAN) as an example) device. The RAN device includes a baseband apparatus and a radio frequency apparatus. The baseband apparatus may be implemented by one or more nodes. The radio frequency apparatus may be independently implemented remotely from the baseband apparatus, or may be integrated into the baseband apparatus, or may be partially implemented remotely from the baseband apparatus and partially integrated into the baseband apparatus. For example, in an LTE communications system, the RAN device (eNB) includes a baseband apparatus and a radio frequency apparatus. The radio frequency apparatus may be remotely disposed relative to the baseband apparatus (for example, a radio remote unit (radio remote unit, RRU) is remotely disposed relative to a baseband processing unit (building base band unit, BBU)). The RAN device is implemented by one node, and the node is configured to implement functions of protocol layers such as radio resource control (radio resource control, RRC), a packet data convergence protocol (packet data convergence protocol, PDCP), radio link control (radio link control, RLC), and media access control (media access control, MAC). For another example, in an evolved structure, the baseband apparatus may include a centralized unit (centralized unit, CU) and a distributed unit (distributed unit, DU), and a plurality of DUs may be centrally controlled by one CU. As shown in FIG. 2, division may be performed for the CU and the DU based on a protocol layer of a wireless network. For example, functions of a packet data convergence protocol layer and a protocol layer above the packet data convergence protocol layer are configured for the CU, and functions of protocol layers below the PDCP such as a radio link control (radio link control, RLC) layer and a media access control layer are configured for the DU.

Such protocol layer division is merely an example, and division may be alternatively performed at another protocol layer, for example, at the RLC layer. Functions of the RLC layer and a protocol layer above the RLC layer are configured for the CU, and a function of a protocol layer below the RLC layer is configured for the DU. Alternatively, division is performed in a protocol layer. For example, some functions of the RLC layer and a function of a protocol layer above the RLC layer are configured for the CU, and a remaining function of the RLC layer and a function of a protocol layer below the RLC layer are configured for the DU. In addition, division may be alternatively performed in another manner, for example, division is performed based on a latency. A function whose processing time needs to meet a latency requirement is configured for the DU, and a function whose processing time does not need to meet the latency requirement is configured for the CU.

In addition, the radio frequency apparatus may not be disposed in the DU but is remotely disposed from the DU, or may be integrated into the DU, or may be partially disposed remotely from the DU and partially integrated into the DU. This is not limited herein.

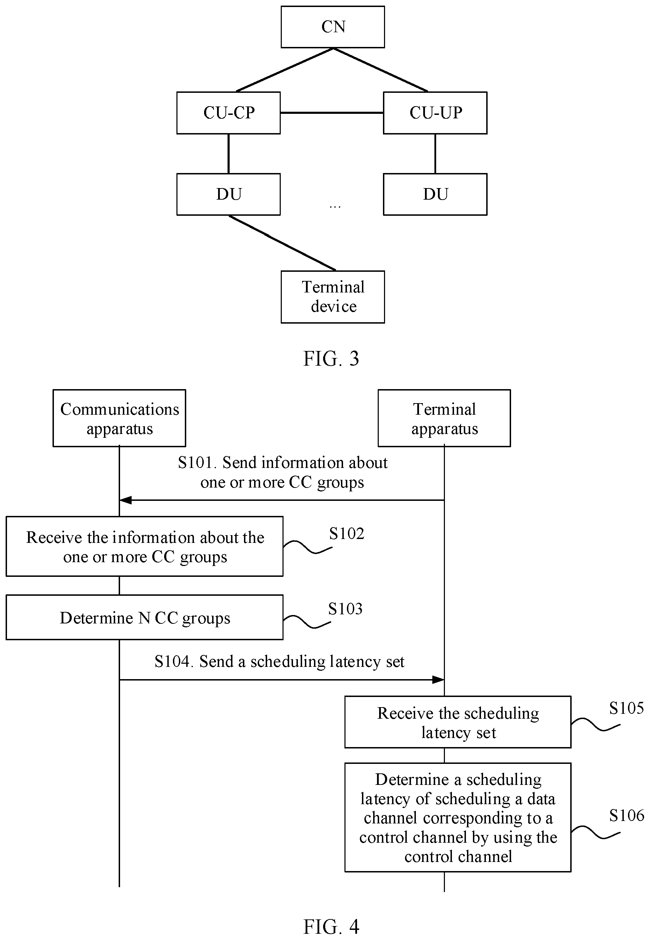

In addition, still referring to FIG. 3, in comparison with the architecture shown in FIG. 2, a control plane (control plane, CP) and a user plane (user plane, UP) of the CU may be further separated and implemented by different entities: a control plane CU entity (CU-CP entity) and a user plane CU entity (CU-UP entity).

In the foregoing network architecture, signaling/data generated by the CU may be sent to a terminal device by using the DU, or signaling/data generated by the terminal device may be sent to the CU by using the DU. The DU may transparently transmit the signaling/data to the terminal device or the CU by directly encapsulating the signaling/data by using a protocol layer without parsing the signaling/data. If the signaling/data is transmitted between the DU and the terminal device in the following embodiments, sending or receiving of the signaling/data by the DU includes this scenario. For example, signaling of the RRC or PDCP layer is finally processed as signaling/data of a physical layer (physical layer, PHY) to be sent to the terminal device, or is converted from received signaling/data of the PHY layer. In this architecture, it may be considered that the signaling/data of the RRC or PDCP layer is sent by the DU or by the DU and the radio frequency.

In the foregoing embodiment, the CU is divided into a network device in a RAN. In addition, the CU may be alternatively divided into a network device in a CN. This is not limited herein.

FIG. 4 is a schematic flowchart of a scheduling latency method according to this application. The method includes the following steps.

S101. A terminal apparatus sends information about one or more component carrier CC groups (group) to a communications apparatus.

Optionally, the information about the one or more CC groups is used by the communications apparatus to determine N CC groups.

For example, the terminal apparatus in this embodiment of this application may be the terminal device shown in FIG. 1 or a chip applied to the terminal device.

Specifically, in this embodiment of this application, before the terminal apparatus performs S101, the method further includes: the terminal apparatus receives one or more CCs configured by the communications apparatus, and the terminal apparatus classifies the one or more CCs into one or more CC groups according to a preset rule.

Specifically, in this embodiment of this application, the communications apparatus may configure the one or more CCs for the terminal apparatus in connected-mode radio resource control (radio resource control, RRC) signaling.

Specifically, the terminal apparatus may classify the one or more CCs into the one or more CC groups based on an implementation of the terminal apparatus.

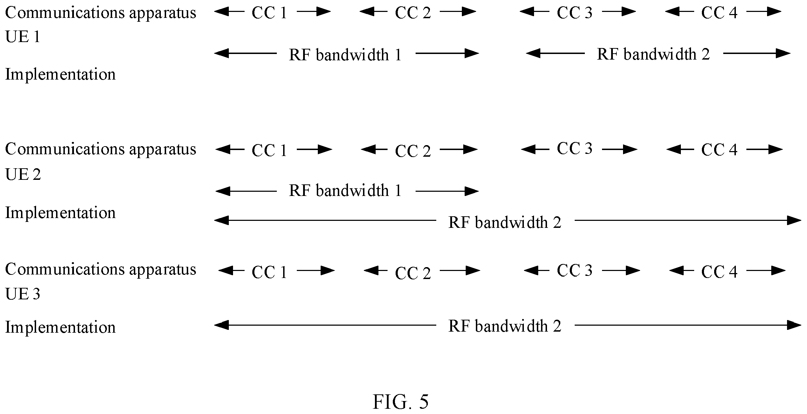

In an example, as shown in FIG. 5, the terminal apparatus is UE. The UE has different implementations (for example, UE 1, UE 2, and UE 3 in FIG. 5). For the UE 1, if the communications apparatus performs scheduling in a CC 1 and a CC 2, the UE 1 may enable an RF bandwidth (bandwidth) 1. However, if the UE 1 determines that the CC 1 to a CC 3 are to be scheduled, the UE 1 enables the RF bandwidth 1 or an RF bandwidth 2 or needs to add an additional time to a scheduling latency to enable an RF corresponding to a scheduled CC. For the UE 2, refer to the UE 1. Details are not described herein again in this application. However, the UE 2 needs to perform RF bandwidth retuning (retune). For example, for the UE 2, if the UE 2 determines to schedule the CC 1 to a CC 4, the UE 2 needs to retune an RF bandwidth from the RF bandwidth 1 to the RF bandwidth 2. Therefore, for the UE 2, an RF bandwidth retuning time needs to be added to the scheduling latency. For the UE 3, the UE always uses the wider RF bandwidth 2 to process the four CCs, and therefore power consumption is consistent when scheduling is performed between different CCs. As shown in FIG. 5, in an example, for the UE 2, the UE 2 determines {CC 1, CC 2} as a CC group (denoted as a CC group X) and {CC 3, CC 4} as another CC group (denoted as a CC group Y), and reports information about the CC group to the communications apparatus.

Because power consumption of the terminal apparatus for processing one or more CCs is different, the terminal apparatus may classify the one or more CCs into one or more CC groups based on power consumption of the terminal apparatus for processing each CC. That is, power consumption of the terminal apparatus corresponding to one or more CCs in a same CC group meets a preset condition. For example, power consumption of processing one or more CCs in a same CC group differs slightly, and power consumption of the terminal apparatus for processing a plurality of CCs in different CC groups differs greatly.

Specifically, if the terminal apparatus determines that power consumption of the terminal apparatus for processing any two or more of the one or more CCs meets the preset condition, the terminal apparatus determines that the any two or more CCs belong to a same CC group. The preset condition includes: the power consumption of the terminal apparatus corresponding to the any two or more CCs is the same, or a difference between the power consumption of the terminal apparatus corresponding to the any two or more CCs is less than or equal to a preset error.

For example, for the UE 2 shown in FIG. 5, if the UE 2 only needs to process the CC 1 and the CC 2 in the CC group X, a radio frequency bandwidth of the UE 2 only needs to work on the narrower RF bandwidth 1. In this case, regardless of whether only the CC 1 or the CC 2 is processed or both the CC 1 and the CC 2 need to be processed, power consumption of the UE 2 differs slightly. However, if the UE 2 needs to process the CC 3 in the another CC group Y in addition to the CC 1 and the CC 2, the UE 2 needs to work on the wider RF bandwidth 2. Therefore, higher power consumption is required.

The information about the one or more CC groups includes information about each CC group and information about one or more CCs included in each CC group.

Specifically, the information about each CC group is used to identify each CC group, and the information about the one or more CCs is used to identify the one or more CCs. The information about each CC group may be an identifier of each CC group, and the information about the one or more CCs includes an identifier of each of the one or more CCs.

It should be noted that CCs included in different CC groups correspond to different power consumption of the terminal apparatus. For example, if the terminal apparatus works in a first CC group, power consumption is lower, or if the terminal apparatus works on both a CC in the first CC group and a CC in a second CC group, power consumption of the terminal apparatus is higher.

S102. The communications apparatus receives the information that is about the one or more component carrier CC groups (group) and that is sent by the terminal apparatus.

Specifically, the communications apparatus in this embodiment of this application may be the network device shown in FIG. 1 or a chip applied to the network device.

S103. The communications apparatus determines the N CC groups based on the information about the one or more component carrier CC groups.

N is a positive integer, and each of the N CC groups includes one or more CCs.

In a possible implementation, in this embodiment of this application, the communications apparatus may directly determine, as the N CC groups, one or more CC groups fed back based on the information that is about the one or more CC groups and that is fed back by the terminal apparatus.

For example, the information that is about the one or more CC groups and that is fed back by the terminal apparatus includes information about a first CC group, information about a second CC group, and information about a third CC group. The first CC group includes a CC 1, a CC 2, and a CC 3, the second CC group includes a CC 4, a CC 5, and a CC 6, and the third CC group includes a CC 7, a CC 8, and a CC 9. In this case, the communications apparatus may determine that the N CC groups include the first CC group, the second CC group, and the third CC group, where the first CC group includes the CC 1, the CC 2, and the CC 3, the second CC group includes the CC 4, the CC 5, and the CC 6, and the third CC group includes the CC 7, the CC 8, and the CC 9.

In another possible implementation, in this embodiment of this application, the communications apparatus may retune a CC in each CC group based on the information that is about the one or more CC groups and that is fed back by the terminal apparatus, to determine the N CC groups.

For example, the information that is about the one or more CC groups and that is fed back by the terminal apparatus includes information about a first CC group, information about a second CC group, and information about a third CC group. The first CC group includes a CC 1, a CC 2, and a CC 3, the second CC group includes a CC 4, a CC 5, and a CC 6, and the third CC group includes a CC 7, a CC 8, and a CC 9. In this case, the communications apparatus may determine that the N CC groups include the first CC group and the second CC group, where the first CC group includes the CC 1, the CC 2, the CC 3, the CC 4, and the CC 5, and the second CC group includes the CC 6, the CC 7, the CC 8, and the CC 9.

It should be noted that when the communications apparatus retunes and determines the N CC groups based on the information that is about the one or more CC groups and that is fed back by the terminal apparatus, the communications apparatus needs to send information about the determined N CC groups to the terminal apparatus.

S104. The communications apparatus sends a scheduling latency set to the terminal apparatus.

The scheduling latency set is used to determine a scheduling latency of scheduling a data channel corresponding to a control channel by using the control channel.

S105. The terminal apparatus receives the scheduling latency set sent by the communications apparatus.

S106. The terminal apparatus determines, based on the scheduling latency set, the scheduling latency of scheduling the data channel corresponding to the control channel by using the control channel.

Optionally, the control channel in this embodiment of this application may be a physical downlink control channel (physical downlink control channel, PDCCH), and the data channel may be a physical downlink shared channel (physical downlink shared channel, PDSCH).

This application provides a scheduling latency determining method. A terminal apparatus sends information about one or more CC groups to a communications apparatus, so that the communications apparatus determines a scheduling latency set for the terminal apparatus based on the CC group, and sends the scheduling latency set to the terminal apparatus. Therefore, the terminal apparatus may determine, based on the scheduling latency set, a scheduling latency of scheduling a data channel corresponding to a control channel by using the control channel. In this way, when a CC is not scheduled before a scheduling latency of the CC is reached, the terminal apparatus may disable a module required for processing the CC, for example, disable an RF module and a baseband module, or the terminal apparatus may indicate the module required for processing the CC to be in a low power mode. In other words, when the terminal apparatus schedules data on one or more CCs, the terminal apparatus may disable a processing module corresponding to a CC group other than CC groups in which the one or more CCs are located in N CC groups, thereby reducing power consumption of the terminal apparatus.

To reduce power consumption of the terminal apparatus, the communications apparatus configures different scheduling latencies for different CCs based on the information that is about the one or more CC groups and that is fed back by the terminal apparatus. In this way, the terminal apparatus can determine the scheduling latency of scheduling the data channel corresponding to the control channel by using the control channel. The following separately describes different scheduling scenarios in which the terminal apparatus determines, based on the scheduling latency set, the scheduling latency of scheduling the data channel corresponding to the control channel by using the control channel.

Scenario 1: The communications apparatus sends the control channel and schedules the data channel corresponding to the control channel on one CC in any CC group.

Because the communications apparatus schedules any CC in any CC group, the terminal apparatus determines, in a same manner, a scheduling latency corresponding to the any scheduled CC. The following uses a first CC group in the N CC groups and a first CC in the first CC group as an example for description. The first CC group is any one of the N CC groups, and the first CC is any CC in the first CC group, and has no indication information meaning.

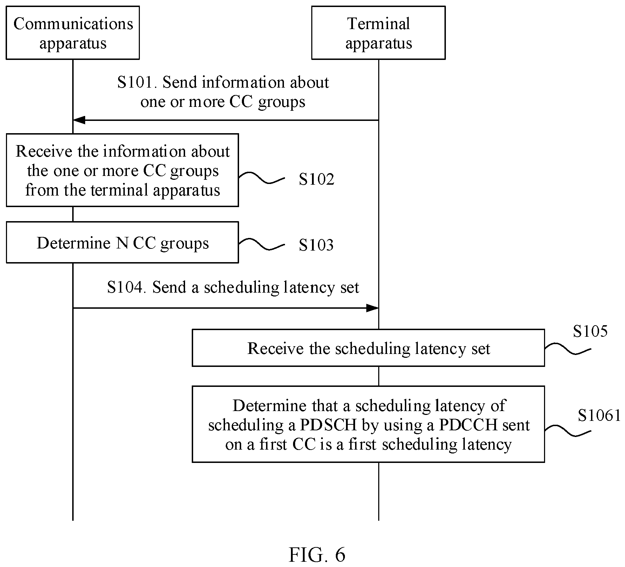

In a possible implementation, as shown in FIG. 6, if the communications apparatus sends the control channel and schedules the data channel corresponding to the control channel on a same CC, and the scheduling latency set includes a first scheduling latency, for example, the N CC groups include at least the first CC group, S106 may be specifically implemented in the following manner:

S1061. If the terminal apparatus determines that the control channel is sent on the first CC and the scheduled data channel corresponding to the control channel is sent on the first CC, the terminal apparatus determines that a scheduling latency of scheduling, by using the control channel sent on the first CC, the data channel that is corresponding to the control channel and that is sent on the first CC is the first scheduling latency, where the first CC is a CC included in any one of the N CC groups.

Specifically, a scheduling latency in this embodiment of this application is a time difference between an end of a last symbol (symbol) of the control channel and a first symbol of the data channel corresponding to the control channel.

For example, the control channel is a PDCCH, and the data channel is a PDSCH. The scheduling latency may be understood as a time difference between an end of a last symbol symbol of the PDCCH and a start of a first symbol of the PDSCH corresponding to the PDCCH.

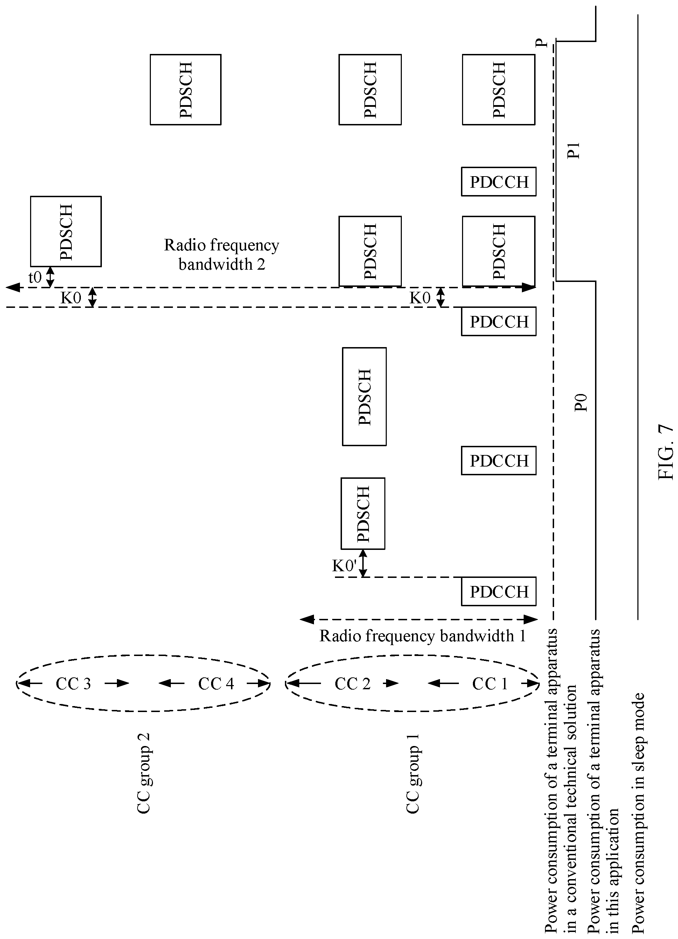

For example, as shown in FIG. 7, the N CC groups include a CC group 1 and a CC group 2. The CC group 1 includes a CC 1 and a CC 2, and the CC group 2 includes a CC 3 and a CC 4. For example, the control channel is a PDCCH, and the data channel is a PDSCH. If the terminal apparatus determines that the PDCCH is sent on the CC 1 in the CC group 1 and the scheduled PDSCH is sent on the CC 1, the terminal apparatus determines that a scheduling latency of scheduling, by using the PDCCH sent on the CC 1, the PDSCH sent on the CC 1 is k0 shown in FIG. 7, where k0 is a scheduling latency configured by the communications apparatus for the terminal apparatus.

Scenario 2: The communications apparatus performs cross-CC scheduling in a same CC group. That is, the communications apparatus sends the control channel on one CC and schedules the data channel corresponding to the control channel on another CC in the same CC group.

For the N CC groups, when the communications apparatus sends the control channel on one CC and schedules the data channel corresponding to the control channel on another CC in any one of the N CC groups, the terminal apparatus determines, in a same manner, a scheduling latency of scheduling the data channel corresponding to the control channel by using the control channel sent on the one CC. Therefore, the following uses a first CC and a second CC included in a first CC group as an example.

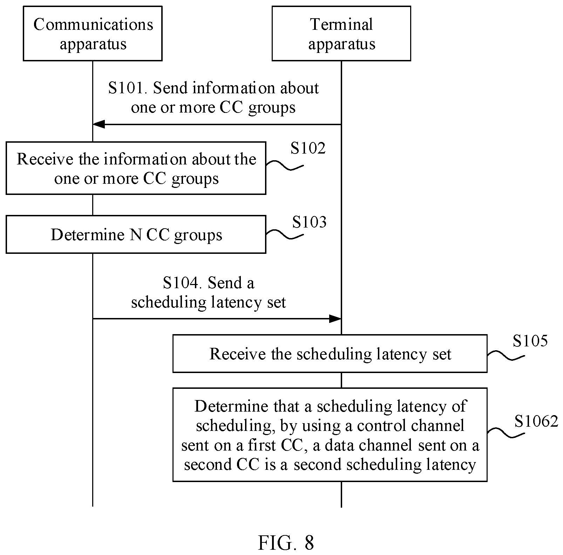

In another possible implementation, as shown in FIG. 8, if the communications apparatus sends the control channel on the first CC and schedules the data channel corresponding to the control channel on the second CC, the first CC and the second CC belong to a same CC group, and the scheduling latency set includes a second scheduling latency, S106 in this embodiment of this application may be alternatively implemented in the following manner:

S1062. If the terminal apparatus determines that the control channel is sent on the first CC and the scheduled data channel corresponding to the control channel is sent on the second CC, and that the first CC and the second CC belong to a same CC group, the terminal apparatus determines that a scheduling latency of scheduling, by using the control channel sent on the first CC, the data channel that is corresponding to the control channel and that is sent on the second CC is the second scheduling latency, where the second scheduling latency is greater than a first scheduling latency.

Specifically, in this embodiment of this application, the second scheduling latency is obtained by the terminal device based on the first scheduling latency and a first time amount.

For example, the terminal apparatus determines, as the second scheduling latency, a scheduling latency obtained by using the first scheduling latency and the first time amount.

Specifically, the first time amount is greater than or equal to a startup (warm up) time of a baseband module corresponding to the second CC.

For example, the baseband module includes an equalization module, a channel estimation module, a demodulation module, and a decoding module.

For example, if the first scheduling latency is T1, and the first time amount is t, the second scheduling latency is T1+t.

For example, as shown in FIG. 7, if the terminal apparatus determines that a PDCCH is sent on a CC 1 and a PDSCH is sent on a CC 2, the terminal apparatus determines that a scheduling latency of scheduling, by using the PDCCH sent on the first CC, the PDSCH sent on the second CC is K0' shown in FIG. 7.

Scenario 3: The communications apparatus schedules any quantity of CCs across CC groups, that is, the communications apparatus sends the control channel on one CC in one of the N CC groups and schedules the data channel corresponding to the control channel on one CC in another CC group.

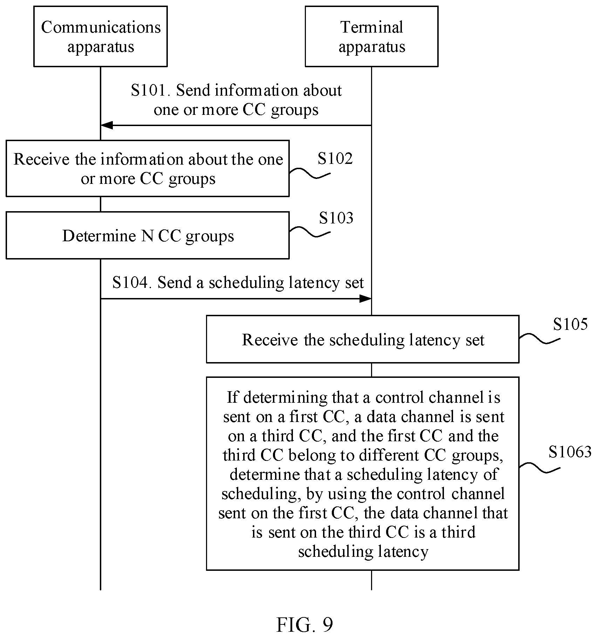

In still another possible implementation, as shown in FIG. 9, when the communications apparatus schedules any quantity of CCs in different CC groups, and the scheduling latency set further includes a third scheduling latency, S106 in this embodiment of this application may be implemented in the following manner:

S1063. If the terminal apparatus determines that the control channel is sent on a first CC and the scheduled data channel corresponding to the control channel is sent on a third CC, and that the first CC and the third CC belong to different CC groups, the terminal apparatus determines that a scheduling latency of scheduling, by using the control channel sent on the first CC, the data channel that is corresponding to the control channel and that is sent on the third CC is the third scheduling latency, where the third scheduling latency is greater than a first scheduling latency.

The third scheduling latency is a preset latency or is obtained through configuration by using higher layer signaling. Specifically, the third scheduling latency is obtained by the terminal apparatus by adding the first scheduling latency to a time for the terminal apparatus to enable or retune an RF module required for processing the third CC. In an example, the third scheduling latency is obtained by the terminal apparatus by adding the first scheduling latency to a radio frequency (radio frequency, RF) retune time required for the third CC.

For example, as shown in FIG. 7, when the terminal apparatus determines that the communications apparatus schedules a PDCCH on a CC 1 and schedules a PDSCH on a CC 3, and that the CC 1 belongs to a CC group 1 and the CC 3 belongs to a CC group 2, the terminal apparatus determines that a scheduling latency of scheduling, by using the PDCCH sent on the CC 1, the PDSCH sent on the CC 3 is K0+t0 shown in FIG. 7, where K0 is the first scheduling latency, and t0 is the RF retune time.

As shown in FIG. 7, in a conventional technical solution, regardless of whether the communications apparatus schedules a CC, all CCs configured by the communications apparatus for the terminal apparatus are in an active mode. However, in this embodiment of this application, when the terminal apparatus determines that the PDCCH is sent on the CC 1 in the CC group 1 and the PDSCH is scheduled on the CC 2 in the CC group 1, or determines that the PDCCH is sent on the CC 1 in the CC group 1 and the PDSCH is scheduled on the CC 1 in the CC group 1, for a sum of power consumption of the terminal apparatus corresponding to the CC 1 and the CC 2, refer to P0 in FIG. 7. When the terminal apparatus determines that the PDCCH is sent on the CC 1 in the CC group 1 and the PDSCH corresponding to the PDCCH is sent on the CC 3 in the CC group 2, for a sum of power consumption of the terminal apparatus corresponding to the CC 1 and the CC 3, refer to P1 in FIG. 7. Therefore, it can be learned from comparison between P1 and P0 that, in this embodiment of this application, power consumption of the terminal apparatus is P1 only when the terminal apparatus determines that scheduling is to be performed across CC groups, and when the communications apparatus performs scheduling in a same CC or schedules different CCs in a same CC group, power consumption P0 of the terminal apparatus is always less than P1.

Optionally, in this embodiment of this application, power consumption of the terminal apparatus for processing any quantity of CCs in any one of the N CC groups is lower than power consumption of the terminal apparatus for processing any quantity of CCs in any two or more of the N CC groups.

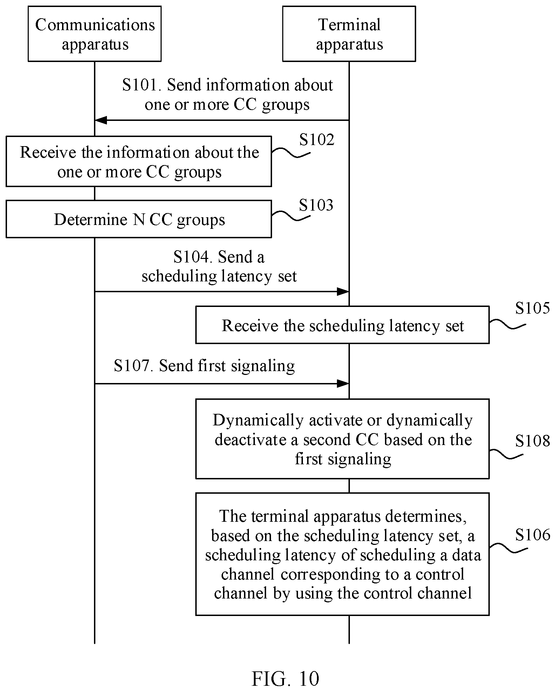

In another possible embodiment of this application, as shown in FIG. 10, the method provided in this application further includes the following steps.

S107. The communications apparatus sends first signaling to the terminal apparatus.

Optionally, the first signaling is sent on the first CC, the first signaling is used to indicate the terminal apparatus to dynamically activate or dynamically deactivate the second CC, and the first CC and the second CC belong to a same CC group.

The dynamic activation in this embodiment of this application means that an activated CC is quickly activated by using physical layer signaling. The dynamic deactivation means that a CC in an activated mode is quickly deactivated by using physical layer signaling.

S108. The terminal apparatus receives the first signaling, and the terminal apparatus dynamically activates or dynamically deactivates the second CC based on the first signaling.

In an example, after the second CC is quickly activated by using the first signaling, the second scheduling latency of scheduling the PDSCH on the second CC by using the PDCCH on the first CC may be the first scheduling latency configured by the communications apparatus, namely, K0.

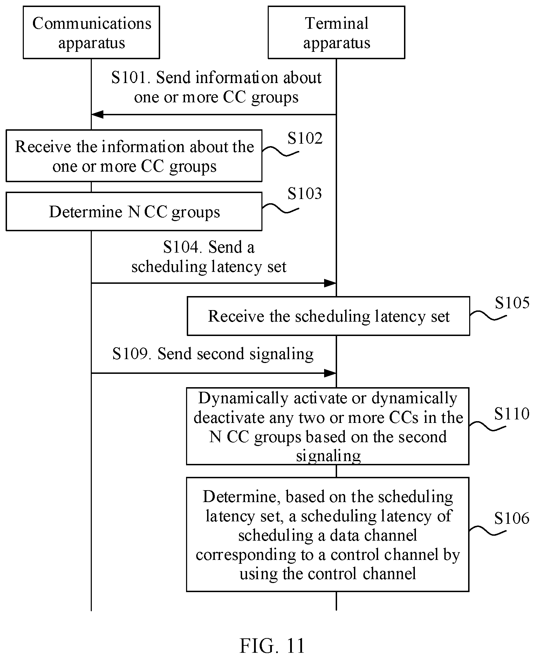

In still another possible embodiment of this application, as shown in FIG. 11, the method provided in this application further includes the following steps.

S109. The communications apparatus sends second signaling to the terminal apparatus.

The second signaling includes a medium access control (medium access control, MAC) control element (control element, CE), and the second signaling is used to activate or deactivate CCs in any two or more different CC groups of the N CC groups. In this embodiment of this application, the communications apparatus configures the terminal apparatus to activate or deactivate the CCs in the any two or more different CC groups of the N CC groups by using the MAC CE. Because CC deactivation or activation is MAC CE activation or deactivation performed in units of CC groups, a time of activating or deactivating a CC by the terminal apparatus can be shortened.

S110. The terminal apparatus receives the second signaling, and the terminal device activates or deactivates the CCs in the any two or more different CC groups of the N CC groups based on the second signaling by using the MAC CE.

In an example, after the terminal apparatus activates the second CC group based on the second signaling, the third scheduling latency of scheduling the PDSCH on the third CC in the second CC group by using the PDCCH on the first CC in the first CC group may be the first scheduling latency configured by the communications apparatus, for example, K0. Therefore, the time for the terminal apparatus to enable or retune the RF module for processing the third CC is not required.

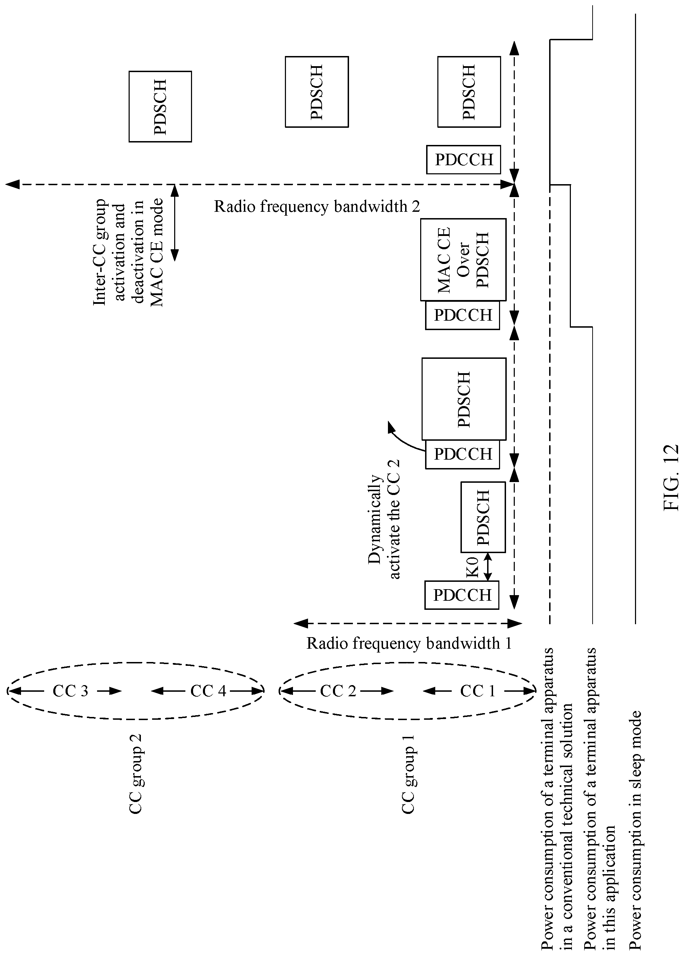

For example, as shown in FIG. 12, when the communications apparatus sends a first message on the CC 1 in the CC group 1, for example, to activate the PDCCH, the CC 2 in the CC group 1 is activated. In addition, when the terminal apparatus receives a second message on the CC 1 or the CC 2 in the CC group 1, the terminal apparatus activates the CC 3 and the CC 4.

The foregoing mainly describes the solutions provided in the embodiments of this application from a perspective of interaction between network elements. It can be understood that to implement the foregoing functions, the network elements, for example, the terminal apparatus and the communications apparatus, include a corresponding hardware structure and/or a corresponding software module that perform/performs the functions. A person of ordinary skill in the art should easily be aware that, in combination with the examples described in the embodiments disclosed in this specification, units, and algorithm steps may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of the embodiments of this application.

In the embodiments of this application, the terminal apparatus and the communications apparatus may be divided into function modules based on the foregoing method examples. For example, each function module may be obtained through division based on each function, or two or more functions may be integrated into one processing module. The integrated module may be implemented in a form of hardware, or may be implemented in a form of a software functional module. It should be noted that in the embodiments of this application, division into modules is an example, and is merely a logical function division. In actual implementation, another division manner may be used. The following uses an example in which the function modules are obtained through division based on corresponding functions.

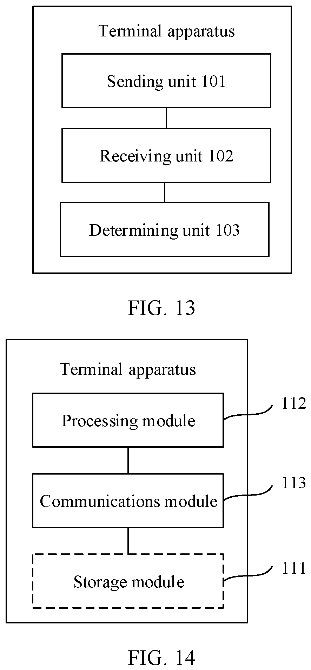

When an integrated unit is used, FIG. 13 is a possible schematic structural diagram of the terminal apparatus in the foregoing embodiments. The terminal apparatus includes a sending unit 101, a receiving unit 102, and a determining unit 103.

The sending unit 101 is configured to support the terminal apparatus in performing S101 in the foregoing embodiments. The receiving unit 102 is configured to support the terminal apparatus in performing S105, S108, and S110 in the foregoing embodiments. The determining unit 103 is configured to support the terminal apparatus in performing S106, S1061, S1062, and S1063 in the foregoing embodiments. All related content of the steps in the foregoing method embodiments may be cited in function descriptions of the corresponding function modules. Details are not described herein again.

Based on hardware implementation, the sending unit 101 in this embodiment of this application may be a transmitter of the terminal device shown in FIG. 1, and the receiving unit 102 may be a receiver of the terminal device shown in FIG. 1. The transmitter may be usually integrated with the receiver to serve as a transceiver. Specifically, the transceiver may alternatively be referred to as a communications interface or a transceiver circuit, and the determining unit 103 may be integrated into a processor of the terminal device shown in FIG. 1.

When an integrated unit is used, FIG. 14 is a possible schematic diagram of a logical structure of the terminal apparatus in the foregoing embodiments. The terminal apparatus includes a processing module 112 and a communications module 113. The processing module 112 is configured to control and manage an action of the terminal apparatus. For example, the processing module 112 is configured to perform a step of processing a message or data on a terminal apparatus side, for example, support the terminal apparatus in performing S106, S1061, S1062, and S1063 in the foregoing embodiments. The communications module 113 is configured to support the terminal apparatus in performing S105, S108, and S110 in the foregoing embodiments, and/or another process performed by the terminal apparatus in the technology described in this specification. Optionally, the terminal apparatus may further include a storage module 111, configured to store program code and data of the terminal apparatus.

The processing module 112 may be a processor or a controller. For example, the processor/controller may be a central processing unit, a general-purpose processor, a digital signal processor (digital signal processor, DSP), an application-specific integrated circuit (application-specific integrated circuit, ASIC), a field programmable gate array (field programmable gate array, FPGA) or another programmable logical device, a transistor logical device, a hardware component, or any combination thereof. The processor/controller may implement or execute various example logical blocks, modules, and circuits described with reference to content disclosed in the present invention. Alternatively, the processor may be a combination of processors implementing a computing function, for example, a combination of one or more microprocessors, or a combination of the digital signal processor and a microprocessor. The communications module 113 may be a transceiver, a transceiver circuit, a communications interface, or the like. The storage module 111 may be a memory.

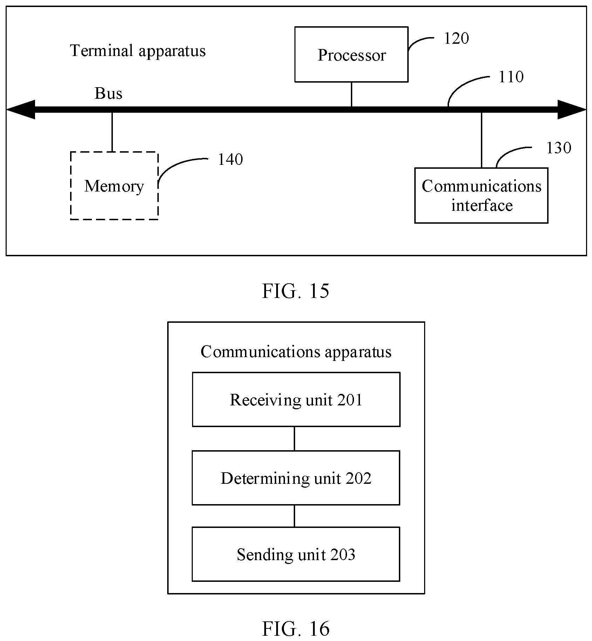

When the processing module 112 is a processor 120, the communication module 113 is a communications interface 130 or a transceiver, and the storage module 111 is a memory 140, the terminal apparatus in this embodiment of this application may be a device shown in FIG. 15.

The communications interface 130, the at least one processor 120, and the memory 140 are connected to each other through the bus 110. The bus 110 may be a PCI bus, an EISA bus, or the like. The bus may be classified into an address bus, a data bus, a control bus, and the like. For ease of representation, only one thick line is used to represent the bus in FIG. 15, but this does not mean that there is only one bus or only one type of bus. The memory 140 is configured to store program code and data of the terminal apparatus. The communications interface 130 is configured to support the terminal apparatus in communicating with another device (for example, the communications apparatus), and the processor 120 is configured to support the terminal apparatus in executing the program code and the data that are stored in the memory 140, to implement the scheduling latency determining method provided in the embodiments of this application.

When an integrated unit is used, FIG. 16 is a possible schematic structural diagram of the communications apparatus in the foregoing embodiments. The communications apparatus includes a receiving unit 201, a determining unit 202, and a sending unit 203. The receiving unit 201 is configured to support the communications apparatus in performing S102 in the foregoing embodiments. The determining unit 202 is configured to support the communications apparatus in performing S103 in the foregoing embodiments. The sending unit 203 is configured to support the communications apparatus in performing S104, S107, and S109 in the foregoing embodiments, and/or another process in the technology described in this specification. All related content of the steps in the foregoing method embodiments may be cited in function descriptions of the corresponding function modules. Details are not described herein again.

Based on hardware implementation, the receiving unit 201 in this embodiment of this application may be a receiver of the network device shown in FIG. 1, and the sending unit 203 may be a transmitter of the network device shown in FIG. 1. The transmitter may be usually integrated with the receiver to serve as a transceiver. A specific transceiver may alternatively be referred to as a communications interface or a transceiver circuit, and the determining unit 202 may be integrated into a processor of the network device shown in FIG. 1.

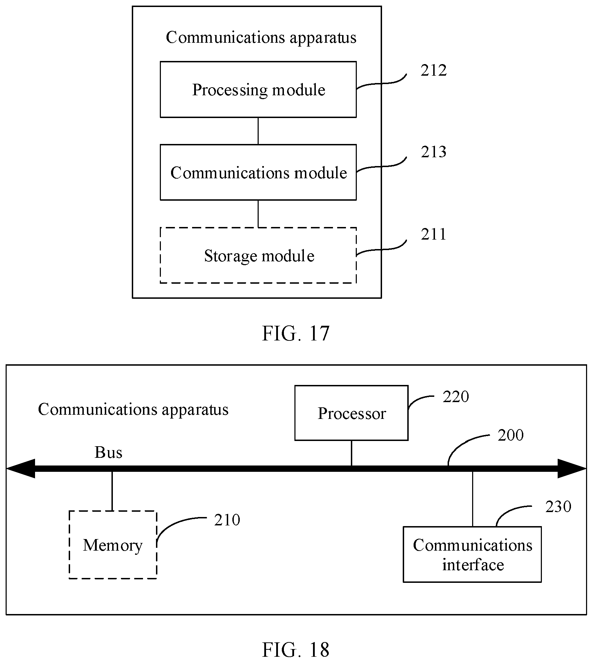

When an integrated unit is used, FIG. 17 is a possible schematic diagram of a logical structure of the communication apparatus in the foregoing embodiments. The communications apparatus includes a processing module 212 and a communications module 213. The processing module 212 is configured to control and manage an action of the communications apparatus. For example, the processing module 212 is configured to support the communications apparatus in processing a message or data on a communications apparatus side in the foregoing embodiments, for example, performing S103 in the foregoing embodiments. The communications module 213 is configured to support the communications apparatus in receiving and sending a message or data on the communications apparatus side in the foregoing embodiments, for example, performing S102, S104, S107, and S109 in the foregoing embodiments, and/or another process performed by the communications apparatus in the technology described in this specification.

Optionally, the communications apparatus may further include a storage module 211, configured to store program code and data of the communications apparatus.

The processing module 212 may be a processor or controller, for example, the processor/controller may be a central processing unit, a general-purpose processor, a digital signal processor (digital signal processor, DSP), an application-specific integrated circuit (application-specific integrated circuit, ASIC), a field programmable gate array (field programmable gate array, FPGA) or another programmable logical device, a transistor logical device, a hardware component, or any combination thereof. The processor/controller may implement or execute various example logical blocks, modules, and circuits described with reference to content disclosed in the present invention. Alternatively, the processor may be a combination of processors implementing a computing function, for example, a combination of one or more microprocessors, or a combination of the digital signal processor and a microprocessor. The communications module 213 may be a transceiver, a transceiver circuit, a communications interface, or the like. The storage module 211 may be a memory.

When the processing module 212 is a processor 220, the communication module 213 is a communications interface 230 or a transceiver, and the storage module 211 is a memory 210, the communications apparatus in this embodiment of this application may be a device shown in FIG. 18.

The communications interface 230, the at least one processor 220, and the memory 210 are interconnected through a bus 200. The bus 200 may be a PCI bus, an EISA bus, or the like. The bus may be classified into an address bus, a data bus, a control bus, and the like. For ease of representation, only one thick line is used to represent the bus in FIG. 18, but this does not mean that there is only one bus or only one type of bus. The memory 210 is configured to store program code and data of the communications apparatus. The communications interface 230 is configured to support the communications apparatus in communicating with another device (for example, the terminal apparatus), and the processor 220 is configured to support the communications apparatus in executing the program code and the data that are stored in the memory 210, to implement the scheduling latency determining method provided in the embodiments of this application.

The foregoing receiving unit (or a unit configured for receiving) is an interface circuit of the apparatus, configured to receive a signal from another apparatus. For example, when the apparatus is implemented through a chip, the receiving unit is an interface circuit that is of the chip and that is configured to receive a signal from another chip or apparatus. The foregoing sending unit (or a unit configured for sending) is an interface circuit of the apparatus, configured to send a signal to another apparatus. For example, when the apparatus is implemented through a chip, the sending unit is an interface circuit that is of the chip and that is configured to send a signal to another chip or apparatus.

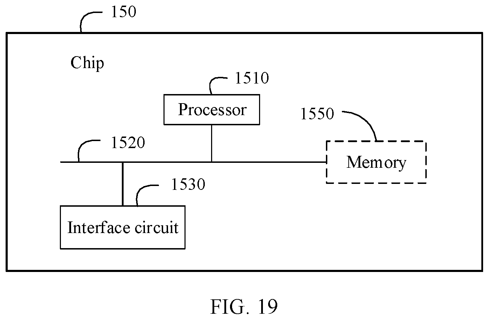

FIG. 19 is a schematic structural diagram of a chip 150 according to an embodiment of this application. The chip 150 includes at least one processor 1510 and an interface circuit 1530.

Optionally, the chip 150 further includes a memory 1550. The memory 1550 may include a read-only memory and a random access memory, and provide an operation instruction and data for the processor 1510. A part of the memory 1550 may further include a non-volatile random access memory (NVRAM).

In some implementations, the memory 1550 stores the following elements: an executable module or a data structure, or a subset thereof, or an extended set thereof:

In this embodiment of this application, a corresponding operation is performed by invoking the operation instruction (the operation instruction may be stored in an operating system) stored in the memory 1550.

In a possible implementation, structures of chips used by the network device and the terminal device are similar, and different apparatuses may use different chips to implement respective functions.

The processor 1510 controls operations of the network device and the terminal device. The processor 1510 may alternatively be referred to as a central processing unit (central processing unit, CPU). The memory 1550 may include a read-only memory and a random access memory, and provide an instruction and data for the processor 1510. A part of the memory 1550 may further include a non-volatile random access memory (NVRAM). Specifically, during application, the memory 1550, the interface circuit 1530, and the memory 1550 are coupled together through a bus system 1520. The bus system 1520 may further include a power bus, a control bus, a status signal bus, and the like in addition to a data bus. However, for clear description, various types of buses in FIG. 19 are marked as the bus system 1520.

The methods disclosed in the embodiments of this application may be applied to the processor 1510, or may be implemented by the processor 1510. The processor 1510 may be an integrated circuit chip and has a signal processing capability. In an implementation process, steps in the foregoing methods can be implemented by using a hardware integrated logical circuit in the processor 1510, or by using instructions in a form of software. The processor 1510 may be a general purpose processor, a digital signal processor (DSP), an application-specific integrated circuit (ASIC), a field programmable gate array (FPGA) or another programmable logic device, a discrete gate or a transistor logic device, or a discrete hardware component. The processor 1510 may implement or perform the methods, the steps, and logical block diagrams that are disclosed in the embodiments of this application. The general purpose processor may be a microprocessor, or the processor may be any conventional processor or the like. Steps of the methods disclosed with reference to the embodiments of this application may be directly executed and accomplished by a hardware decoding processor, or may be executed and accomplished by a combination of hardware and a software module in a decoding processor. The software module may be located in a mature storage medium in the art, such as a random access memory, a flash memory, a read-only memory, a programmable read-only memory, an electrically erasable programmable memory, or a register. The storage medium is located in the memory 1550, and the processor 1510 reads information in the memory 1550 and completes the steps in the foregoing methods in combination with hardware of the processor.

Optionally, the interface circuit 1530 is configured to perform receiving and sending steps of the communications apparatus and the terminal apparatus in the embodiments shown in FIG. 4, FIG. 6, FIG. 8, FIG. 9, FIG. 10, and FIG. 11.

The processor 1510 is configured to perform processing steps of the communications apparatus and the terminal apparatus in the embodiments shown in FIG. 4, FIG. 6, FIG. 8, FIG. 9, FIG. 10, and FIG. 11.

In the foregoing embodiments, the instruction that is stored in the memory and that is to be executed by the processor may be implemented in a form of a computer program product. The computer program product may be written into the memory in advance, or may be downloaded and installed in the memory in the form of software.

The computer program product includes one or more computer instructions. When the computer program instructions are loaded and executed on the computer, the procedure or functions according to the embodiments of this application are all or partially generated. The computer may be a general-purpose computer, a dedicated computer, a computer network, or other programmable apparatuses. The computer instructions may be stored in a computer readable storage medium or may be transmitted from a computer readable storage medium to another computer readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, DVD), a semiconductor medium (for example, a solid-state drive Solid State Disk, SSD), or the like.

According to an aspect, a computer storage medium is provided. The computer readable storage medium stores an instruction. When the instruction is run, a terminal apparatus is enabled to perform S106, S1061, S1062, S1063, S105, S108, and S110 in the embodiments, and/or another process performed by the terminal apparatus in the technology described in this specification.

According to another aspect, a computer storage medium is provided. The computer readable storage medium stores an instruction. When the instruction is run, a communications apparatus is enabled to perform S103, S102, S104, S107, and S109 in the embodiments, and/or another process performed by the communications apparatus in the technology described in this specification.

According to an aspect, a computer program product including an instruction is provided. The computer program product stores the instruction. When the instruction is run, a terminal apparatus is enabled to perform S106, S1061, S1062, S1063, S105, S108, and S110 in the embodiments, and/or another process performed by the terminal apparatus in the technology described in this specification.

According to another aspect, a computer program product including an instruction is provided. The computer program product stores the instruction. When the instruction is run, a communications apparatus is enabled to perform S103, S102, S104, S107, and S109 in the embodiments, and/or another process performed by the communications apparatus in the technology described in this specification.

According to an aspect, a chip is provided. The chip is applied to a terminal device, the chip includes at least one processor and an interface circuit, and the interface circuit is coupled to the at least one processor. The processor is configured to run a computer program or an instruction, to perform S106, S1061, S1062, S1063, S105, S108, and S110 in the embodiments, and/or another process performed by the terminal device in the technology described in this specification.

According to another aspect, a chip is provided. The chip is applied to a network device, the chip includes at least one processor and an interface circuit, and the interface circuit is coupled to the at least one processor. The processor is configured to run a computer program or an instruction, to perform S103, S102, S104, S107, and S109 in the embodiments, and/or another process performed by the network device in the technology described in this specification.

In addition, an embodiment of this application further provides a communications system. The relay system includes the terminal apparatus shown in FIG. 13 to FIG. 15, and the communications apparatus shown in FIG. 16 to FIG. 18.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the embodiments of this application.

It may be clearly understood by a person skilled in the art that, for convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, the division into units is merely a logical function division. In actual implementation, another division manner may be used. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, function units in the embodiments of this application may be integrated into one processing unit, or each of the units may exist alone physically, or two or more units are integrated into one unit.

When functions are implemented in the form of a software functional unit and sold or used as an independent product, the functions may be stored in a computer readable storage medium. Based on such an understanding, the technical solutions of the embodiments of this application essentially, or the part contributing to the prior art, or some of the technical solutions may be implemented in a form of a software product. The software product is stored in a storage medium, and includes several instructions for instructing a computer device (which may be a personal computer, a server, or a network device) to perform all or some of the steps of the methods described in the embodiments of this application. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A scheduling latency determining method, comprising:
sending, by a terminal apparatus, information about one or more component carrier CC groups to a communications apparatus, wherein the information about the one or more CC groups is used by the communications apparatus to determine N CC groups, each of the N CC groups comprises one or more CCs, and N is a positive integer;
receiving, by the terminal apparatus, a scheduling latency set sent by the communications apparatus; and
determining, by the terminal apparatus based on the scheduling latency set, a scheduling latency of scheduling a data channel corresponding to a control channel by using the control channel.

2. The scheduling latency determining method according to claim 1, wherein the method further comprises:
receiving, by the terminal apparatus, one or more CCs configured by the communications apparatus; and
classifying, by the terminal apparatus, the one or more CCs into one or more CC groups based on power consumption corresponding to the one or more CCs, wherein power consumption corresponding to one or more CCs comprised in any one of the one or more CC groups is less than power consumption corresponding to a plurality of CCs comprised in any two or more of the one or more CC groups.

3. The scheduling latency determining method according to claim 1 or 2, wherein the scheduling latency set comprises a first scheduling latency, and the determining, by the terminal apparatus based on the scheduling latency set, a scheduling latency of scheduling a data channel corresponding to a control channel by using the control channel comprises:
if the terminal apparatus determines that the control channel is sent on a first CC and the scheduled data channel corresponding to the control channel is sent on the first CC, determining, by the terminal apparatus, that a scheduling latency of scheduling, by using the control channel sent on the first CC, the data channel that is corresponding to the control channel and that is sent on the first CC is the first scheduling latency, wherein the first CC is a CC comprised in any one of the N CC groups.

4. The scheduling latency determining method according to claim 1 or 2, wherein the scheduling latency set comprises a second scheduling latency, and the determining, by the terminal apparatus based on the scheduling latency set, a scheduling latency of scheduling a data channel corresponding to a control channel by using the control channel comprises:
if the terminal apparatus determines that the control channel is sent on a first CC and the scheduled data channel corresponding to the control channel is sent on a second CC, and that the first CC and the second CC belong to a same CC group, determining, by the terminal apparatus, that a scheduling latency of scheduling, by using the control channel sent on the first CC, the data channel that is corresponding to the control channel and that is sent on the second CC is the second scheduling latency, wherein the second scheduling latency is greater than a first scheduling latency.

5. The scheduling latency determining method according to claim 1 or 2, wherein the scheduling latency set comprises a third scheduling latency, and the determining, by the terminal apparatus based on the scheduling latency set, a scheduling latency of scheduling a data channel corresponding to a control channel by using the control channel comprises:
if the terminal apparatus determines that the control channel is sent on a first CC and the scheduled data channel corresponding to the control channel is sent on a third CC, and that the first CC and the third CC belong to different CC groups, determining, by the terminal apparatus, that a scheduling latency of scheduling, by using the control channel sent on the first CC, the data channel that is corresponding to the control channel and that is sent on the third CC is the third scheduling latency, wherein the third scheduling latency is greater than a first scheduling latency.

6. The scheduling latency determining method according to claim 5, wherein the third scheduling latency is obtained by using the first scheduling latency and a preset latency, or the third scheduling latency is obtained through configuration by using higher layer signaling.

7. The scheduling latency determining method according to any one of claims 1 to 6, wherein the method further comprises:
receiving, by the terminal apparatus, first signaling sent by the communications apparatus on the first CC, wherein the first signaling is used to indicate the terminal apparatus to dynamically activate or dynamically deactivate the second CC, and the first CC and the second CC belong to a same CC group.

8. The scheduling latency determining method according to any one of claims 1 to 7, wherein the method further comprises:
receiving, by the terminal apparatus, second signaling sent by the communications apparatus, wherein the second signaling comprises a media access control control element MAC CE, and the second signaling is used to indicate the terminal apparatus to activate or deactivate all CCs in any one of the N CC groups.

9. A scheduling latency determining method, comprising:
receiving, by a communications apparatus, information that is about one or more component carrier CC groups and that is sent by a terminal apparatus;
determining, by the communications apparatus, N component carrier CC groups based on the information about the one or more component carrier CC groups, wherein each of the N CC groups comprises one or more CCs, and N is a positive integer; and
sending, by the communications apparatus, a scheduling latency set to the terminal apparatus, wherein the scheduling latency set is used to determine a scheduling latency of scheduling a data channel corresponding to a control channel by using the control channel.

10. The scheduling latency determining method according to claim 9, wherein the scheduling latency set comprises a first scheduling latency, the scheduling latency set is used by the terminal apparatus to determine that a scheduling latency of scheduling, by using the control channel sent on a first CC, the data channel that is corresponding to the control channel and that is sent on the first CC is the first scheduling latency, the first CC is a CC comprised in any one of the N CC groups, and the first scheduling latency is greater than or equal to 0.

11. The scheduling latency determining method according to claim 9, wherein the scheduling latency set comprises a second scheduling latency, the second scheduling latency is greater than the first scheduling latency, the scheduling latency set is used to indicate the terminal apparatus to determine that a scheduling latency of scheduling, by using the control channel sent on a first CC, the data channel that is corresponding to the control channel and that is sent on a second CC is the second scheduling latency, and the first CC and the second CC belong to a same CC group.

12. The scheduling latency determining method according to claim 9, wherein the scheduling latency set comprises a third scheduling latency, the third scheduling latency is greater than the first scheduling latency, the scheduling latency set is used to indicate the terminal apparatus to determine that a scheduling latency of scheduling, by using the control channel sent on a first CC, the data channel that is corresponding to the control channel and that is sent on a third CC is the third scheduling latency, and the first CC and the third CC belong to different CC groups.

13. The scheduling latency determining method according to any one of claims 9 to 12, wherein the method further comprises:
sending, by the communications apparatus, first signaling to the terminal apparatus on the first CC, wherein the first signaling is used to indicate the terminal apparatus to dynamically activate or dynamically deactivate the second CC, and the first CC and the second CC belong to a same CC group.

14. The scheduling latency determining method according to any one of claims 9 to 13, wherein the method further comprises:
sending, by the communications apparatus, second signaling to the terminal apparatus, wherein the second signaling comprises a media access control control element MAC CE, and the second signaling is used to indicate the terminal apparatus to activate or deactivate all CCs in any one of the N CC groups.

15. The scheduling latency determining method according to any one of claims 9 to 14, wherein power consumption corresponding to one or more CCs comprised in any one of the N CC groups is less than power consumption corresponding to a plurality of CCs comprised in any two or more of the N CC groups.

16. A scheduling latency determining apparatus, comprising:
a sending unit, configured to send information about one or more component carrier CC groups to a communications apparatus, wherein the information about the one or more CC groups is used by the communications apparatus to determine N CC groups, each of the N CC groups comprises one or more CCs, and N is a positive integer;
a receiving unit, configured to receive a scheduling latency set sent by the communications apparatus; and
a determining unit, configured to determine, based on the scheduling latency set, a scheduling latency of scheduling a data channel corresponding to a control channel by using the control channel.

17. The scheduling latency determining apparatus according to claim 16, wherein the receiving unit is further configured to receive one or more CCs configured by the communications apparatus; and the determining unit is further configured to classify the one or more CCs into one or more CC groups based on power consumption corresponding to the one or more CCs, wherein power consumption corresponding to one or more CCs comprised in any one of the one or more CC groups is less than power consumption corresponding to a plurality of CCs comprised in any two or more of the one or more CC groups.

18. The scheduling latency determining apparatus according to claim 16 or 17, wherein the scheduling latency set comprises a first scheduling latency, and the determining unit is specifically configured to: if determining that the control channel is sent on a first CC and the scheduled data channel corresponding to the control channel is sent on the first CC, determine that a scheduling latency of scheduling, by using the control channel sent on the first CC, the data channel that is corresponding to the control channel and that is sent on the first CC is the first scheduling latency, wherein the first CC is a CC comprised in any one of the N CC groups.

19. The scheduling latency determining apparatus according to claim 16 or 17, wherein the scheduling latency set comprises a second scheduling latency, and the determining unit is specifically configured to: if determining that the control channel is sent on a first CC and the scheduled data channel corresponding to the control channel is sent on a second CC, and that the first CC and the second CC belong to a same CC group, determine that a scheduling latency of scheduling, by using the control channel sent on the first CC, the data channel that is corresponding to the control channel and that is sent on the second CC is the second scheduling latency, wherein the second scheduling latency is greater than a first scheduling latency.

20. The scheduling latency determining apparatus according to claim 16 or 17, wherein the scheduling latency set comprises a third scheduling latency, and the determining unit is specifically configured to: if determining that the control channel is sent on a first CC and the scheduled data channel corresponding to the control channel is sent on a third CC, and that the first CC and the third CC belong to different CC groups, determine that a scheduling latency of scheduling, by using the control channel sent on the first CC, the data channel that is corresponding to the control channel and that is sent on the third CC is the third scheduling latency, wherein the third scheduling latency is greater than a first scheduling latency.

21. The scheduling latency determining apparatus according to claim 20, wherein the third scheduling latency is obtained by using the first scheduling latency and a preset latency, or the third scheduling latency is obtained through configuration by using higher layer signaling.

22. The scheduling latency determining apparatus according to any one of claims 16 to 21, wherein the receiving unit is further configured to receive first signaling sent by the communications apparatus on the first CC, wherein the first signaling is used to indicate to dynamically activate or dynamically deactivate the second CC, and the first CC and the second CC belong to a same CC group.

23. The scheduling latency determining apparatus according to any one of claims 16 to 22, wherein the receiving unit is further configured to receive second signaling sent by the communications apparatus, wherein the second signaling comprises a media access control control element MAC CE, and the second signaling is used to indicate to activate or deactivate all CCs in any one of the N CC groups.

24. A scheduling latency determining apparatus, comprising:
a receiving unit, configured to receive information that is about one or more component carrier CC groups and that is sent by a terminal apparatus;
a determining unit, configured to determine N component carrier CC groups based on the information about the one or more component carrier CC groups, wherein each of the N CC groups comprises one or more CCs, and N is a positive integer; and
a sending unit, configured to send a scheduling latency set to the terminal apparatus, wherein the scheduling latency set is used to determine a scheduling latency of scheduling a data channel corresponding to a control channel by using the control channel.

25. The scheduling latency determining apparatus according to claim 24, wherein the scheduling latency set comprises a first scheduling latency, the scheduling latency set is used by the terminal apparatus to determine that a scheduling latency of scheduling, by using the control channel sent on a first CC, the data channel that is corresponding to the control channel and that is sent on the first CC is the first scheduling latency, the first CC is a CC comprised in any one of the N CC groups, and the first scheduling latency is greater than or equal to 0.

26. The scheduling latency determining apparatus according to claim 25, wherein the scheduling latency set comprises a second scheduling latency, the second scheduling latency is greater than the first scheduling latency, the scheduling latency set is used to indicate the terminal apparatus to determine that a scheduling latency of scheduling, by using the control channel sent on a first CC, the data channel that is corresponding to the control channel and that is sent on a second CC is the second scheduling latency, and the first CC and the second CC belong to a same CC group.

27. The scheduling latency determining apparatus according to claim 26, wherein the scheduling latency set comprises a third scheduling latency, the third scheduling latency is greater than the first scheduling latency, the scheduling latency set is used to indicate the terminal apparatus to determine that a scheduling latency of scheduling, by using the control channel sent on a first CC, the data channel that is corresponding to the control channel and that is sent on a third CC is the third scheduling latency, and the first CC and the third CC belong to different CC groups.

28. The scheduling latency determining apparatus according to any one of claims 24 to 27, wherein the sending unit is further configured to send first signaling to the terminal apparatus on the first CC, wherein the first signaling is used to indicate the terminal apparatus to dynamically activate or dynamically deactivate the second CC, and the first CC and the second CC belong to a same CC group.

29. The scheduling latency determining apparatus according to any one of claims 24 to 28, wherein the sending unit is further configured to send second signaling to the terminal apparatus, wherein the second signaling comprises a media access control control element MAC CE, and the second signaling is used to indicate the terminal apparatus to activate or deactivate all CCs in any one of the N CC groups.

30. The scheduling latency determining apparatus according to any one of claims 24 to 29, wherein power consumption corresponding to one or more CCs comprised in any one of the N CC groups is less than power consumption corresponding to a plurality of CCs comprised in any two or more of the N CC groups.

31. A communication method, comprising:
receiving configuration information of one or more component carriers CCs from a communications apparatus;
classifying the one or more CCs into one or more CC groups; and
sending information about the one or more CC groups to the communications apparatus.

32. The method according to claim 31, wherein the classifying the one or more CCs into one or more CC groups comprises:
classifying the one or more CCs into one or more CC groups based on power consumption corresponding to the one or more CCs.

33. The method according to claim 32, wherein power consumption corresponding to one or more CCs comprised in any one of the one or more CC groups is less than power consumption corresponding to a plurality of CCs comprised in any two or more of the one or more CC groups.

34. The method according to any one of claims 31 to 33, wherein the information about the one or more CC groups comprises information about each CC group and information about one or more CCs comprised in each CC group, the information about each CC group is used to identify each CC group, and the information about the one or more CCs is used to identify the one or more CCs.

35. The method according to any one of claims 31 to 34, wherein the method further comprises:
receiving information about N CC groups from the communications apparatus, wherein the N CC groups are determined based on the information about the one or more CC groups.

36. A communication method, comprising:
sending configuration information of one or more component carriers CCs to a terminal apparatus; and
receiving information about one or more CC groups from the terminal apparatus, wherein the one or more CC groups are obtained through classifying based on the one or more CCs.

37. The method according to claim 36, wherein power consumption corresponding to one or more CCs comprised in any one of the one or more CC groups is less than power consumption corresponding to a plurality of CCs comprised in any two or more of the one or more CC groups.

38. The method according to claims 36 or 37, wherein the information about the one or more CC groups comprises information about each CC group and information about one or more CCs comprised in each CC group, the information about each CC group is used to identify each CC group, and the information about the one or more CCs is used to identify the one or more CCs.

39. The method according to any one of claims 36 to 38, wherein the method further comprises:
determining N CC groups based on the received information about the one or more CC groups; and
sending information about the determined N CC groups to the terminal apparatus.

40. The method according to claim 39, wherein the determining N CC groups comprises: retuning a CC in the received one or more CC groups to obtain the N CC groups.

41. An apparatus, wherein the apparatus is configured to implement the communication method according to any one of claims 31 to 35.

42. An apparatus, wherein the apparatus is configured to implement the communication method according to any one of claims 36 to 40.

43. A communications system, comprising the apparatus according to claim 41 and the apparatus according to claim 42.

44. A chip, wherein the chip comprises a processor and an interface circuit, the interface circuit is coupled to the processor, the processor is configured to run a computer program or an instruction, to implement the scheduling latency determining method according to any one of claims 1 to 8, or to implement the scheduling latency determining method according to any one of claims 9 to 15, or to implement the communication method according to any one of claims 31 to 35, or to implement the communication method according to any one of claims 36 to 40, and the interface circuit is configured to communicate with a module other than the chip.

45. A computer readable storage medium, wherein the computer readable storage medium stores a computer program or an instruction, and when the computer program or the instruction is run, the scheduling latency determining method according to any one of claims 1 to 8 is implemented, or the scheduling latency determining according to any one of claims 9 to 15 is implemented, or the communication method according to any one of claims 31 to 35 is implemented, or the communication method according to any one of claims 36 to 40 is implemented.
